# EUROPÄISCHE PATENTANMELDUNG

(11) **EP 2 933 127 A1**
(43) Veröffentlichungstag der Anmeldung: **21.10.2015**
(21) Anmeldenummer: 14004360.5
(22) Anmeldetag: 22.12.2014
(51) Int. Cl.: B60J 7/16

(54) **Dachluke für Fahrzeuge**

(30) Priorität: 17.04.2014 DE 102014005746
(71) Anmelder: HAPPICH GmbH, 42119 Wuppertal (DE)
(72) Erfinder: Bednarz, Joachim, D-42287 Wuppertal (DE); Bollmann, Rainer, D-42111 Wuppertal (DE)

(57) **Zusammenfassung**

Die Erfindung bezieht sich auf eine Dachluke (10) für Fahrzeuge, mit einem im wesentlichen rechteckigen Lukenrahmen (11), einem im wesentlichen rechteckigen Lukendeckel (12), mit Dichtmitteln zwischen dem Lukenrahmen (11) und dem Lukendeckel (12) und mit Mitteln zu Halterung des Lukendeckels (12) am Lukenrahmen (11), die aus jeweils zwei an den Schmalseiten des Lukendeckels (12) und des Lukenrahmens (11) befestigten, manuell oder elektromotorisch betätigbaren Ausstellern (13) bestehen. Es ist dabei erfindungsgemäß vorgesehen, dass zur Betätigung der Aussteller (13) eine in einem im wesentlichen flach dimensionierten Lukenrahmen (11) befindliche, ferderunterstützte Hebelmechanik (14) ausgebildet ist.

## Beschreibung

Die Erfindung bezieht sich auf eine Dachluke für Fahrzeuge, mit einem im wesentlichen rechteckigen Lukenrahmen, einem im wesentlichen rechteckigen Lukendeckel, mit Dichtmitteln zwischen dem Lukenrahmen und dem Lukendeckel und mit Mitteln zu Halterung des Lukendeckels am Lukenrahmen, die aus jeweils zwei an den Schmalseiten des Lukendeckels und des Lukenrahmens befestigten, manuell oder elektromotorisch betätigbaren Ausstellern bestehen.

Es sind dazu aus dem Stand der Technik verschiedene Dachluken vergleichbarer Art bekannt:
Moderne Busse verfügen i.d.R. über eine oder mehrere Notausstiegsluken (NAL), wobei die Deckel elektrisch oder manuell geöffnet und geschlossen werden können. Neben der Belüftungsfunktion dienen diese bei einem Unfall auch als wichtiger Notausstieg, falls der Bus umgekippt oder eingekeilt ist und nicht anders verlassen werden kann. Da Busdächer in Zukunft deutlich dünner sein werden als die heutigen Dächer mit 50 mm, werden die heutigen Dachluken mit ihrer voluminösen Antriebstechnik und der großen Einbautiefe von 44 - 50 mm dafür nicht mehr einsetzbar sein. Aus diesem Grund wird eine komplett neue Konstruktion von Rahmen und Antriebsmechanik erforderlich.

Es werden von diversen Herstellern verschiedene Varianten von NAL angeboten:
Zur Montage in die Dächer von Autobussen werden vorzugsweise Außenrahmen aus gebogenen Aluminiumprofilen oder Kunststoff-Spritzgießteile verwendet. Wobei die Rahmen aus Aluminium den Vorteil der flexiblen Abmessungen und relativ freien Gestaltung der Profilgeometrie haben, aber Nachteile bei Gewicht, Kondenswasserbildung, Verschweißung und Abdichtung der Profilstöße aufweisen. Kunststoffrahmen sind leichter, frei von Kältebrücken, aber in der Profilgeometrie weniger flexibel (keine Hinterschnitte möglich). Abmessungen sind nur mit großem Aufwand zu ändern, die Stabilität erreicht nicht die von Aluminiumrahmen. Die Abmessungen solcher Konstruktionen in Z-Richtung in das Fahrzeuginnere betragen i.d.R. zwischen OK-Dachhaut und UK-Rahmen ca. 35 und 50 mm. Abzüglich einer realistischen Stärke des Kleberauftrags von 2 mm ragen die Konstruktionen zwischen 33 und 48 mm in den Innenraum des Fahrzeugs.

Bezüglich der Abdichtung der Außenrahmen gegen die Dachhaut erfolgt hier die Abdichtung mit einem PU-Kleber mit einer Auftragsstärke von ca. 2 mm. Der Kleber übernimmt gleichzeitig auch die Fixierung des Rahmens und den Ausgleich von Unebenheiten auf der Dachhaut. Es werden keine weiteren Befestigungselemente verwendet.

Bezüglich der Abdichtung der Außenrahmen gegen den Deckel erfolgt hier die Abdichtung mit flexiblen EPDM-, Schlauch-, Moos- oder Zellgummiprofil, je nach Ausführung mit einem geklebten oder bei hochwertigeren Ausführungen vulkanisierten Profilstoß. Dieses Dichtprofil ist mit einem Kantenschutzprofil verklebt. Das Kantenschutzprofil wird auf einen Profilsteg am Außenrahmenprofil gesteckt. Die Stoßstelle des Kantenschutzprofils ist wegen des innenliegenden Gerüstbandes nicht vulkanisierbar. Diese Stoßstelle muss bei der Montage zwingend gegenüber dem Außenrahmen abgedichtet werden. Diese Art von Dichtprofilen sind sehr voluminös und verhindern einen flachen Aufbau der NAL oberhalb der Dachhaut. Durch den hohen Aufbau können Windgeräusche entstehen.

Bezüglich der Befestigung des Deckels am Aussteller sind die Kunststoffdeckel mit Schraubdomen zur Befestigung am Aussteller versehen. Die Glasdeckel sind mit Löchern versehen und werden mit je zwei Schrauben und Muttern unter Verwendung von entsprechenden Gummidichtringen mit dem Aussteller verschraubt. Die Löcher verteuern und schwächen die Glasdeckel, das Verschrauben birgt die Gefahr von Undichtigkeiten. Die überstehenden Muttern bieten eine Einbruchsmöglichkeit und können unter ungünstigen Umständen Windgeräusche verursachen.

Bezüglich der Ausstiegsvarianten muss zum Verlassen des Fahrzeugs im Falle eines Unfalls muss eine festgelegte Ausstiegsfläche von mindestens 500 x 700 mm2 zur Verfügung stehen. Diese Fläche entsteht entweder nach Auswerfen eines Metall- oder Kunststoff-Dachlukendeckels (Deckel) mittels einer geeigneten Vorrichtung oder durch Zerstörung des Deckels aus Einscheiben-Sicherheitsglas (ESG) mit einem Nothammer oder einer anderen dafür geeigneten Zerstörungsmechanik.

Bei den bekannten Dachluken bestehen verschiedene Betätigungsvarianten. Die Deckel sind in vielen Fällen zur Be- und Entlüftung des Fahrzeugs in drei Öffnungsstellungen ausstellbar: vorne offen, hinten offen, vorne und hinten offen. Dabei wird die Betätigung zum Öffnen entweder von Hand oder mit einer elektrisch betriebenen Ausstellmechanik vorgenommen.

Die bekannten elektrischen Antriebe arbeiten häufig nach dem sogenannten Scherenwagenheber-Prinzip oder mit horizontal, elektrisch bewegten Seilzügen, auf die Betätigungselemente aufgepresst sind. Nachteilig sind hier die sehr hohen benötigten Motorleistungen auf Grund ungünstiger Hebelverhältnisse, bzw. hoher Reibungsverluste und Überwindung von hohen Federkräften, die eine sichere Schließstellung des Deckels gewährleisten.

Die bekannten mechanischen Ausstellmechaniken arbeiten häufig über Federbügel aus Flachstahl oder mit Schraubenfedern, die auf entsprechende Hebel wirken. Das Wirkprinzip ist jeweils eine Ober-bzw. Untertotpunktstellung der Mechanik mit entsprechender Vorspannung in der Endstellung. Dadurch wird der Deckel jeweils in der Auf- oder Zu-Position gehalten. Nachteilig an dieser Art der nur durch die Federvorspannung fixierten Stellung des Deckels ist, dass die NAL von außen auch von Unbefugten zu öffnen sind und dass die Deckel sich bei hohen Fahrgeschwindigkeiten durch den im Fahrzeug erzeugten Überdruck und dem auf dem Fahrzeugdach entstehenden Unterdruck selbstständig öffnen können.

Bezüglich der bekannten Dachluken sei dazu beispielhaft auf das EP- Patent EP 0 709 244 B1 verwiesen, in diesem Fall ist unterhalb des Lukendeckels ein Innendeckel angeordnet, wobei der Innendeckel zwischen dem Lukendeckel und den beiden Ausstellern eingeklemmt ist und wobei der Innendeckel eine fensterartige, den Lukendeckel für eine Angriff mittels eines Nothammers zugänglich machende Öffnung aufweist. Eine derartige Dachluke weist genau die zuvor beschriebenen Nachteile des Standes der Technik auf.

Ausgehend von diesen bekannten Dachluken liegt der Erfindung die Aufgabe zu Grunde, die bekannten Anordnungen unter Beibehaltung der bisherigen Vorteile in der Weise zu verbessern bzw. weiter zu entwickeln, dass die Nachteile der bekannten Ausführungsformen vermieden werden, wobei insbesondere eine Konstruktion einer leichten Dachluke mit Notausstiegsfunktion mit geringer Ein- und Aufbauhöhe und großer Öffnungsweite geschaffen werden soll. Die gewünschte Anordnung soll auch einfach im Aufbau, einfach in der Handhabung und zuverlässig in ihren Funktionseigenschaften sein.

Die Aufgabe wird erfindungsgemäß dadurch gelöst, dass zur Betätigung der Aussteller eine in einem im wesentlichen flach dimensionierten Lukenrahmen befindliche, federunterstützte Hebelmechanik ausgebildet ist. Auf diese Weise wird erstmalig mit einfachen Mitteln eine Dachluke der gewünschten Art geschaffen, die leicht in der Konstruktion ist, eine geringe Ein- und Aufbauhöhe und eine große Öffnungsweite aufweist. Die erfindungsgemäße Dachluke wird dabei insofern der neueren Entwicklung in der Busindustrie gerecht, als dass in Zukunft die Dachstärken aus Gründen der Gewichtseinsparung und Vergrößerung der Stehhöhe, von derzeit ca. 45 bis 50 mm auf bis zu 25 mm reduziert werden. Die Rahmengeometrie wurde deshalb entsprechend angepasst. Die Gesamteinbautiefe der neuen Dachluken bzw. ihres Lukenrahmens ab Oberkante-Dachhaut beträgt nur noch 27 mm. Nach Abzug der Höhe des Kleberauftrags von 2 mm ergibt sich eine Einbautiefe in der Stärke der Dachhaut von 25 mm. Die Rahmenhöhe über Oberkante-Dach beträgt nur noch ca. 19 mm statt bisher 28 mm.

Bei der bevorzugten Ausführungsform der vorliegenden Erfindung besteht der im wesentlichen flach dimensionierte Lukenrahmen aus einem aus einem Stück bestehenden Profilelement. Vorzugsweise besteht dabei der im wesentlichen flach dimensionierte Lukenrahmen aus einem in einem Stück gebogenen und an der Stoßstelle verbundenen Metallprofil wie Aluminiumprofil. Mit einer derartigen Ausgestaltung kann schnell und kostengünstig auf neuere Entwicklungen dahingehend reagiert werden, dass die Abmessungen der gesetzlich vorgeschriebenen Ausstiegsfläche sich voraussichtlich in den nächsten Jahren vergrößern wird. Bezüglich der Verbindung an der Stoßstelle sind verschiedene Lösungen wie Kleben, Schweißen, Stecken, Verschrauben oder Kombinationen von diesen möglich.

Es empfiehlt sich nach einem weiteren Merkmal der vorliegenden Erfindung, dass die Verbindung des Lukendeckels mit den Ausstellern als Klebeverbindung ausgebildet ist. Dadurch entfallen die Bohrungen im Lukendeckel und die kompletten Befestigungs- und Dichtungsteile. Undichtigkeiten in diesem Bereich sind damit komplett ausgeschlossen.

In bevorzugter Ausgestaltung der vorliegenden Erfindung besteht der Lukendeckel aus Einscheiben- Sicherheitsglas. In davon abweichender Ausgestaltung kann aber auch vorgesehen sein, dass der Lukendeckel aus Metall oder Kunststoff besteht. Bei der Ausführungsform aus Metall ist dabei vorzugsweise zum Auswerfen dieses Lukendeckels aus Metall eine zwischen dem Lukendeckel und den Ausstellern angeordnete Zwischenplatte vorgesehen. Dabei ist bevorzugt die Zwischenplatte lösbar mit den Ausstellern verbunden.

Nach einem weiteren Merkmal der vorliegenden Erfindung ist vorgesehen, dass der Lukendeckel über Hubschienen an den Ausstellern befestigt ist. Dabei sind bevorzugt zur Fixierung des Lukendeckels gegen den Lukenrahmen an den Hubschienen befestigte Zugseile ausgebildet. Es kann dabei in bevorzugter Ausgestaltung zur Fixierung des Lukendeckels gegen den Lukenrahmen eine zusätzliche mechanische Verriegelung ausgebildet sein.

Es empfiehlt sich nach einem weiteren Merkmal der vorliegenden Erfindung, dass zur Führung des Lukendeckels in den Hubschienen eine Kombination von Stützhebeln, Druckfedern und Gleitstücken ausgebildet ist, derart, dass die Druckfedern über die Gleitstücke auf die sich in den Hubschienen horizontal bewegenden Stützhebel einwirken. Dabei können sich in den Hubschienen, z.B. jeweils durch Mittelstege getrennt, vorgespannte Druckfedern mit je einem Gleitstück zur Minimierung der Reibung befinden. Es sind dabei vorzugsweise die Aussteller über Gehäuseelemente an dem Lukenrahmen befestigt. Dabei empfiehlt es sich, dass die Stützhebel über Lagerelemente in den Gehäuseelementen drehbar gelagert sind.

Nach einem weiteren Merkmal der vorliegenden Erfindung ist vorgesehen, dass die Zugseile auf der den Hubschienen gegenüberliegenden Seiten auf in den Gehäuseelementen gelagerten Wickelwellen mit konischen Seiltrommeln aufwickelbar sind. Dabei ist bevorzugt zum Antrieb der Wickelwellen in den Gehäuseelementen jeweils wenigstens ein Elektromotor ausgebildet. Die Elektromotoren können dabei in vorteilhafter Ausgestaltung horizontal verschiebbar in den Gehäuseelementen gelagert sein.

Zweckmäßig ist es nach einem weiteren Merkmal der vorliegenden Erfindung, dass zur Erzeugung der Federvorspannung zum Heben des Lukendeckels alternativ oder ergänzend an den Stützhebeln befindliche Schenkelfedern ausgebildet sind.

Es empfiehlt sich nach einem weiteren Merkmal der vorliegenden Erfindung, dass zur Stabilisierung des Lukendeckels nach Abschluss des Öffnungsvorganges an den Stützhebeln auf den Boden der Gehäuseelemente einwirkende Anschläge ausgebildet sind.

Nach einem weiteren Merkmal der vorliegenden Erfindung ist vorgesehen, dass der Konus der Seiltrommeln der Wickelwellen derart ausgebildet ist, dass die Zugseile vom größeren zum kleineren Durchmesser hin aufgewickelt werden. Dadurch wird bewirkt, dass sich die Schließgeschwindigkeit mit zunehmender Schließzeit verringert,. Die Zugkraft wird erhöht. Durch diese Ausbildung kann ein relativ leichter und kleiner Elektromotor zum Einsatz kommen. Es können dabei bevorzugt zur weiteren Reduzierung der Ziehkraft die Zugseile alternativ oder ergänzend über an den Hubschienen angeordnete Umlenkrollen geführt werden.

Bei einer anderen Ausführungsform der vorliegenden Erfindung sind die Stützhebel über ein zusätzliches Drehgelenk zweiteilig ausgebildet und weisen wenigstens eine zusätzliche Umschlagfeder auf.

Es empfiehlt sich nach einem weiteren Merkmal der vorliegenden Erfindung, dass der Lukendeckel eine Notbetätigung aufweist, derart, dass nach horizontaler Verschiebung der Elektromotoren jeweils ein an dem jeweilig freiliegenden Ende der Wickelwellen ausgebildeter Innensechskant vom Fahrzeuginneren aus betätigbar ist. Zum Schließen des Lukendeckels wird dabei z.B. mit einem Ratschenschlüssel über den Innensechskant die Wickelwelle gedreht und der Lukendeckel geschlossen.

Nach einem weiteren Merkmal der vorliegenden Erfindung ist vorgesehen, dass die manuelle Betätigung des Lukendeckels eine den Lukendeckel über jeweils wenigstens einen Kipphebel formschlüssig an den Hubschienen verrastende mechanische Verriegelung umfasst. Dabei sind bevorzugt die Kipphebel in den Gehäuseelementen beweglich, unter Vorspannung wenigstens einer Schenkelfeder auf Zapfen gelagert. Dabei kann nach einem weiteren Merkmal der vorliegenden Erfindung dabei vorgesehen sein, dass zur Begrenzung der Öffnungsgeschwindigkeit des Lukendeckels ein auf die Lagerelemente der Stützhebel einwirkender Rotationsdämpfer ausgebildet ist.

Nach einem letzten Merkmal der vorliegenden Erfindung ist dabei vorgesehen, dass der Lukendeckel eine Einrichtung zur Be- und Entlüftung umfasst. Durch dieses optionale Zusatzmerkmal wird eine sehr vorteilhafte Zusatzfunktion verwirklicht.

Die Erfindung ist in den Figuren der Zeichnung in mehreren Ausführungsbeispielen dargestellt. Es zeigen:
- Fig. 1: eine schematische, perspektivische Draufsicht auf die erfindungsgemäße Dachluke in beidseitig geöffnetem Zustand,
- Fig. 2: eine schematische Querschnittsansicht der erfindungsgemäßen Dachluke in beidseitig geöffnetem Zustand,
- Fig. 3: eine schematische Querschnittsansicht des linken unteren Teils der erfindungsgemäßen Dachluke gemäß Fig. 2,
- Fig. 4: eine schematische, perspektivische Draufsicht und eine Hinteransicht auf einen. Stützhebel einer abgewandelten Ausführungsform der erfindungsgemäßen Dachluke,
- Fig. 5: eine schematische, perspektivische Draufsicht auf die innere Hubschiene der erfindungsgemäßen Dachluke mit manueller Betätigung,
- Fig. 6: eine schematische, perspektivische Draufsicht auf die Kipphebeleinrichtung der manuellen Betätigung der erfindungsgemäßen Dachluke gemäß Fig.5 mit geschlossenem Kipphebel,
- Fig. 7: eine schematische, perspektivische Draufsicht auf die Kipphebeleinrichtung der manuellen Betätigung der erfindungsgemäßen Dachluke gemäß Fig.5 mit geöffnetem Kipphebel,
- Fig. 8: eine schematische Seitenansicht auf die Verbindungsstelle Lukendeckel - Lukenrahmen der erfindungsgemäßen Dachluke bei geschlossenem Zustand der Dachluke,
- Fig. 9: eine schematische, perspektivische Draufsicht auf die Motorführung der erfindungsgemäßen Dachluke im axialen Grundzustand,
- Fig. 10: eine schematische, perspektivische Draufsicht auf die Motorführung der erfindungsgemäßen Dachluke im axial leicht verschobenem Zustand,
- Fig. 11: eine schematische, perspektivische Draufsicht auf die Motorführung der erfindungsgemäßen Dachluke im axial verschobenem Zustand,
- Fig. 12: eine schematische, perspektivische Draufsicht auf die Notbetätigung der erfindungsgemäßen Dachluke mit angedeuteten Betätigungselementen.

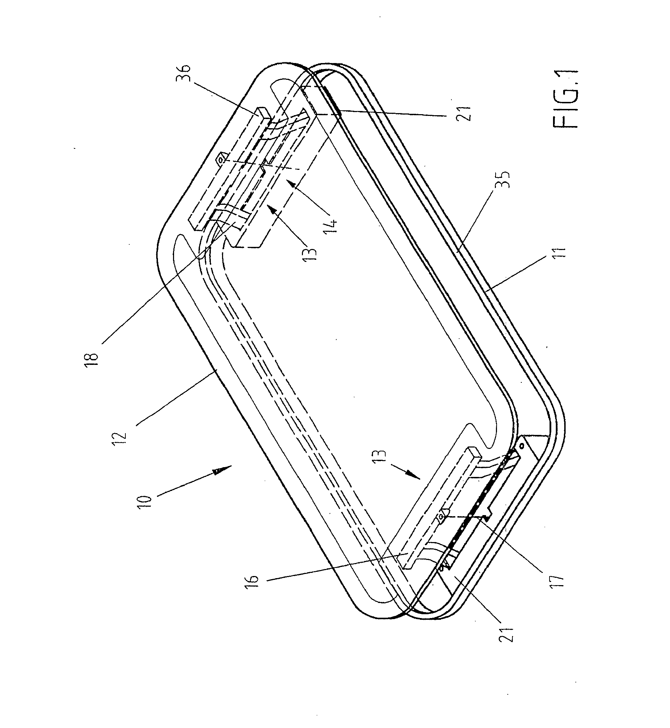

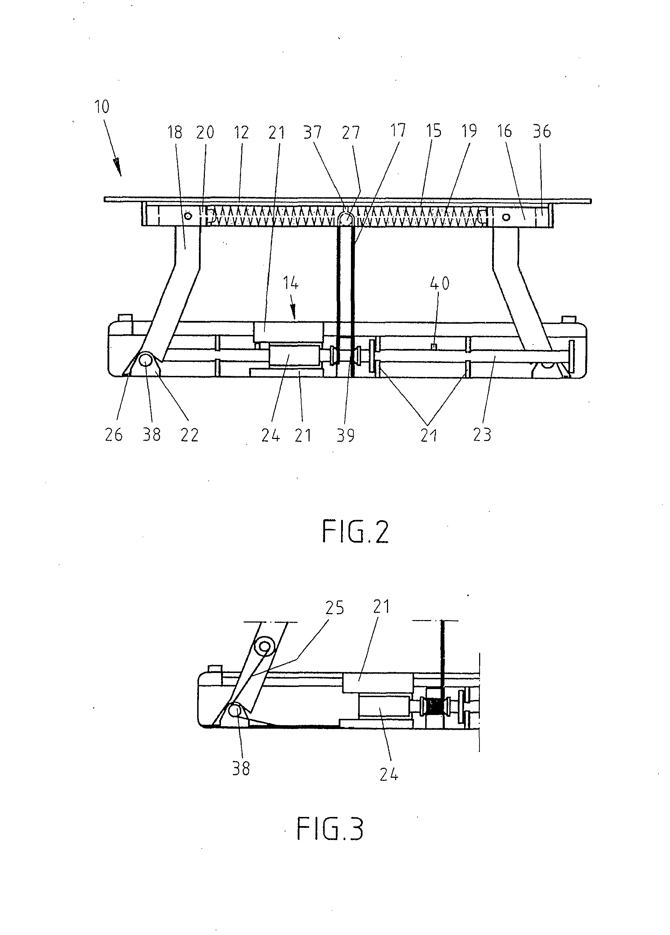

Die erfindungsgemäße Dachluke für Fahrzeuge ist generell mit 10 bezeichnet. Die erfindungsgemäße Dachluke 10 ist versehen mit einem im wesentlichen rechteckigen Lukenrahmen 11, einem im wesentlichen rechteckigen Lukendeckel 12, mit Dichtmitteln zwischen dem Lukenrahmen 11 und dem Lukendeckel 12 und mit Mitteln zu Halterung des Lukendeckels 12 am Lukenrahmen 11, die aus jeweils zwei an den Schmalseiten des Lukendeckels 12 und des Lukenrahmens 11 befestigten, manuell oder elektromotorisch betätigbaren Ausstellern 13 bestehen. Es wird dazu zunächst auf die Fig. 1 und 2 der Zeichnung verwiesen, in der die erfindungsgemäße Dachluke 10 in Draufsicht bzw. Querschnittsansicht in beidseitig geöffnetem Zustand dargestellt ist.

Es ist nun erfindungsgemäß vorgesehen, dass zur Betätigung der Aussteller 13 eine in einem im wesentlichen flach dimensionierten Lukenrahmen 11 befindliche, federunterstützte Hebelmechanik 14 ausgebildet ist. Es ist dazu in den einzelnen Figuren der Zeichnungen diese federunterstützte Hebelmechanik 14 im einzelnen dargestellt. Auf diese Weise wird erstmalig mit einfachen Mitteln eine Dachluke 10 der gewünschten Art geschaffen, die leicht in der Konstruktion ist, eine geringe Ein- und Aufbauhöhe und eine große Öffnungsweite aufweist. Die erfindungsgemäße Dachluke 10 wird dabei insofern der neueren Entwicklung in der Busindustrie gerecht, als dass in Zukunft die Dachstärken aus Gründen der Gewichtseinsparung und Vergrößerung der Stehhöhe, von derzeit ca. 45 bis 50 mm auf bis zu 25 mm reduziert werden. Die Rahmengeometrie wurde deshalb entsprechend angepasst. Die Gesamteinbautiefe der neuen Dachluken 10 bzw. ihres Lukenrahmens 11 ab Oberkante-Dachhaut beträgt nur noch 27 mm. Nach Abzug der Höhe des Kleberauftrags von 2 mm ergibt sich eine Einbautiefe in der Stärke der Dachhaut von 25 mm. Die Rahmenhöhe über Oberkante-Dach beträgt nur noch ca. 19 mm statt bisher 28 mm.

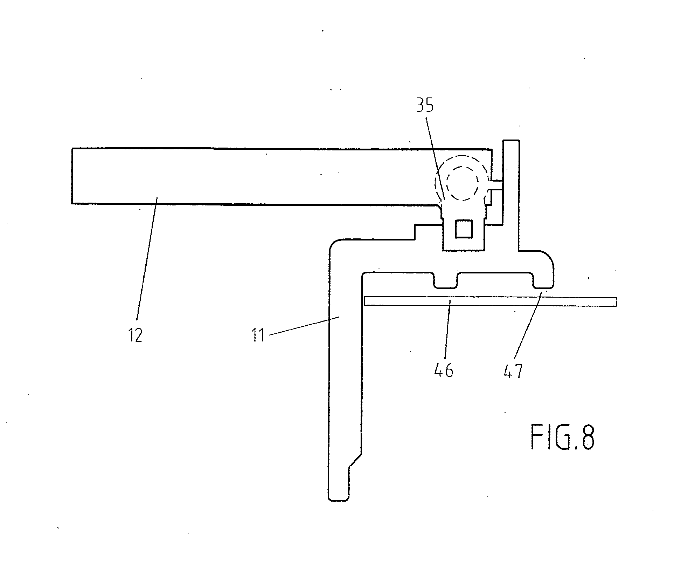

Die Abdichtung des Lukenrahmens 11 gegenüber der Dachhaut 46 erfolgt dabei, siehe Fig. 8 der Zeichnung, mit einem PU-Kleber mit einer Auftragsstärke von ca. 2 mm, der Klebespalt ist hier mit 47 bezeichnet. Der Kleber übernimmt gleichzeitig auch die Fixierung des Lukenrahmens 11 und den Ausgleich von Unebenheiten auf der Dachhaut 47. Es sind keine weiteren Befestigungselemente vorgesehen.

Die Abdichtung Lukenrahmens 11 gegen den Lukendeckel 12 erfolgt mit einem als flexibles Silikon-Schlauchprofil (Dichtprofil) ausgebildeteten Dichutngsmittel 35, mit Dichtlippe und kleinem Querschnitt. Der Profilstoß wird mit Silikon verklebt. Dieses Dichtprofil wird mit einem Silikonkleber in eine umlaufende Nut des Außenrahmenprofils geklebt. Diese Arten von Dichtprofilen und Verklebungen sind sehr witterungs- und alterungsbeständig. Bei dieser Variante liegt der Lukendeckel 12 innerhalb des Außenrahmenprofils. Durch den flachen Aufbau können nur sehr geringe Windgeräusche entstehen.

Der im wesentlichen flach dimensionierte Lukenrahmen 11 der erfindungsgemäße Dachluke 10 besteht aus einem aus einem Stück bestehenden Profilelement, bevorzugt aus einem in einem Stück gebogenen und an der Stoßstelle verbundenen Metallprofil wie Aluminiumprofil. Mit einer derartigen Ausgestaltung kann schnell und kostengünstig auf neuere Entwicklungen dahingehend reagiert werden, dass die Abmessungen der gesetzlich vorgeschriebenen Ausstiegsfläche sich voraussichtlich in den nächsten Jahren vergrößern wird. Bezüglich der Verbindung an der Stoßstelle sind verschiedene Lösungen wie Kleben, Schweißen, Stecken, Verschrauben oder Kombinationen von diesen möglich.

Die Verbindung des Lukendeckels 12 mit den Ausstellern 13 ist vorliegend als Klebeverbindung ausgebildet. Dadurch entfallen die Bohrungen im Lukendeckel 11 und die kompletten Befestigungs- und Dichtungsteile. Undichtigkeiten in diesem Bereich sind damit komplett ausgeschlossen. Die Befestigung kann ein Scharnier enthalten, um ein Auswerfen eines Lukendeckels 12 aus Metall zu ermöglichen.

In bevorzugter Ausgestaltung der vorliegenden Erfindung besteht der Lukendeckel 12 aus Einscheiben- Sicherheitsglas. In davon abweichender Ausgestaltung kann aber auch vorgesehen sein, dass der Lukendeckel 12 aus Metall oder Kunststoff besteht. Bei der Ausführungsform aus Metall ist dabei vorzugsweise zum Auswerfen dieses Lukendeckels 12 aus Metall eine zwischen dem Lukendeckel 12 und den Ausstellern 13 angeordnete Zwischenplatte 15 vorgesehen, siehe z.B. die Fig. 2 der Zeichnung. Dabei ist bevorzugt die Zwischenplatte 15 lösbar mit den Ausstellern 13 verbunden. Die Notausstiegsfunktion wird also vorliegend über die Zerstörung des Lukendeckels 12 aus Einscheiben-Sicherheitsglas gewährleistet. Bei der NAL der zweiten Generation wird dabei eine neue, sehr einfach aufgebaute, hier nicht näher betrachtete Zerstörungsmechanik eingesetzt. Eine Auswerfmöglichkeit für Lukendeckel 12 aus Metall ist über die Zwischenplatte 15 zwischen Lukendeckel 12 und Hubschiene 16 möglich, dazu ist die Zwischenplatte 15 jeweils lösbar mit der Hubschiene 16 verbunden.

Bezüglich der Betätigung des Lukendeckels 12 gibt es mehrere Varianten, die Lukendeckel 12 sind in vielen Fällen zur Be- und Entlüftung des Fahrzeugs in drei Öffnungsstellungen ausstellbar: vorne offen, hinten offen, vorne und hinten offen. Dabei wird die Betätigung zum Öffnen entweder von Hand oder mit einer elektrisch betriebenen Ausstellmechanik vorgenommen.

Der Lukendeckel 12 der erfindungsgemäßen Dachluke 10 ist über Hubschienen 16 an den Ausstellern 13 befestigt, siehe z.B. wieder die Fig. 1 und 2 der Zeichnung. Zur Fixierung des Lukendeckels 12 gegen den Lukenrahmen 11 sind bei den dargestellten Ausführungsformen an den Hubschienen 16 befestigte Zugseile 17 ausgebildet, siehe insbesondere Fig. 2. Es kann dabei zur Fixierung des Lukendeckels 12 gegen den Lukenrahmen 11 ein zusätzliche mechanische Verriegelung ausgebildet sein, diese ist hier nicht dargestellt.

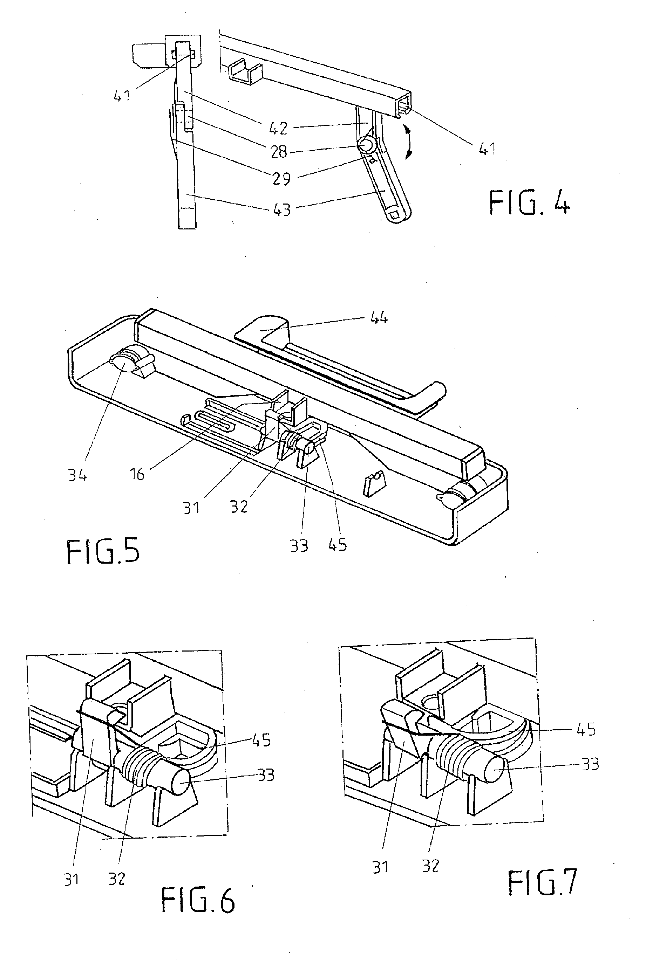

Zur Führung des Lukendeckels 12 ist in den Hubschienen 16 eine Kombination von Stützhebeln 18, Druckfedern 19 und Gleitstücken 20 ausgebildet ist, derart, dass die Druckfedern 19 über die Gleitstücke 20 auf die sich in den Hubschienen 16 in Kulissenführungen 41 horizontal bewegenden Stützhebel 18 einwirken, siehe auch die Fig. 4 der Zeichnung. Dabei können sich in den Hubschienen 16, z.B. jeweils durch Mittelstege 37 getrennt, vorgespannte Druckfedern 19 mit je einem Gleitstück 20 zur Minimierung der Reibung befinden.

Die Aussteller 13 sind bei den dargestellten Ausführungsformen über Gehäuseelemente 21 an dem Lukenrahmen 11 befestigt, siehe wieder die Fig. 1 oder 2 der Zeichnung. Dabei sind die Stützhebel 18 über Lagerelemente 22 in den Gehäuseelementen 21 drehbar gelagert.

Die Zugseile 17 sind vorliegend auf der den Hubschienen 16 gegenüberliegenden Seiten auf in den Gehäuseelementen 21 gelagerten Wickelwellen 23 mit konischen Seiltrommeln aufwickelbar, siehe wieder Fig. 2. Die Wickelwellen 23 werden in den Gehäuseelemente 21 in Lagern geführt. Diese Lager können als komplette Lager oder als Halbschalen in den Gehäuseelementen 21 und nicht bezeichneten Gehäusedeckeln ausgeführt sein.

Zum Antrieb der Wickelwellen 23 ist in den Gehäuseelementen 21 jeweils wenigstens ein Elektromotor 24 ausgebildet, siehe wieder Fig.2. Die Elektromotoren 24 können mit angeflanschten Untersetzungsgetrieben (Elektromotoren) versehen sein, die durch Selbsthemmung die Wickelwelle 23 in ihrer Position halten. Die Elektromotoren 24 sind dabei horizontal verschiebbar in den Gehäuseelementen 21 gelagert, siehe wieder Fig. 2. Eine zusätzliche Fixierung des Lukendeckels 12 in X-und Y-Richtung ist durch den umlaufenden Rand des Lukenrahmens 11 gegeben, der den Lukendeckel 12 im geschlossenen Zustand einfasst. Zur Erzeugung der Federvorspannung zum Heben des Lukendeckels 12 können alternativ oder ergänzend an den Stützhebeln 18 befindliche Schenkelfedern 25 ausgebildet sein, siehe die Fig. 3 der Zeichnung.

Die Öffnung des Lukendeckels 12) wird aus der geschlossenen Stellung heraus durch das Schließen eines Stromkreises gestartet. Das kann durch einen vom Fahrer betätigten Schalter oder durch optionale Fernbedienungen oder optionale, temperaturabhängige Sensoren geschehen. Der in den Gehäuseelementen 21 horizontal verschiebbare Elektromotor 24 läuft an und dreht die angekoppelte Wickelwelle 23. Das auf die konische Seiltrommel 39 aufgerollte Zugseil 17, das an einem Ende lösbar mit der Hubschiene 16 verbunden ist, wird abgewickelt. Beim Abwickeln des Zugseils 17 drücken die beiden in der Hubschiene 16 liegenden, vorgespannten Druckfedern 19 die Stützhebel 18 nach außen und damit den Lukendeckel 12 nach oben. Die nach oben wirkende Federkraft wird erzeugt durch einen Höhenversatz der Lagerungen der Stützhebel 18 in den Gehäuseelemente 21 und der Hubschiene 16. In den Gehäuseelementen 21 sind die Stützhebel 18 beweglich mit Zapfen in Lagerelementen 22 in den Gehäuseelementen 21 befestigt. Diese Lagerelemente 22 können durch je zwei im Gehäuse und Gehäusedeckel als Halbschalen ausgeführte Lagerschalen gebildet werden oder im Gehäuse als komplettes Lager ausgeführt sein.

Die Stützhebel 18 sind horizontal beweglich in der Hubschiene 16 geführt und können sich kreisbogenförmig nach oben bewegen. Der Öffnungsvorgang wird elektronisch überwacht. Zur Stabilisierung des Lukendeckels 12 nach Abschluss des Öffnungsvorganges sind an den Stützhebeln 18 auf den Boden der Gehäuseelemente 21 einwirkende Anschläge 26 ausgebildet, siehe wieder die Fig. 2. Mit Abschluss der Öffnung liegen die Stützhebel 18 dabei unter Federvorspannung an Anschlägen 36 der Hubschienen 16 an. Beim Öffnen einer Seite kann es bauartbedingt erforderlich sein, dass erst die gegenüberliegende Seite minimal geöffnet werden muss, um ein Aufsetzen des Lukendeckels 12 auf dem Lukenrahmen 11 zu vermeiden. Dieser Vorgang wird, wenn erforderlich, über die elektronische Steuerung aktiviert. Erst wenn eine Seite komplett geöffnet ist, kann der zweite Antrieb zur beidseitigen Öffnung des Lukendeckels gestartet werden.

Der Schließvorgang des Lukendeckels 12 wird aus der geöffneten Stellung heraus durch das Schließen eines Stromkreises gestartet. Das kann durch einen vom Fahrer betätigten Schalter, durch optionale Fernbedienungen, temperaturabhängige Sensoren oder Regensensoren geschehen, die Kopplung solcher Sensoren ist in der elektronischen Steuerung vorgesehen. Beim Öffnen läuft der Elektromotor 24 mit umgekehrter Drehrichtung zur Drehrichtung beim Schließen des Lukendeckels 12. Dadurch wickelt sich das Zugseil 17 auf die konische Seiltrommel 39. Dabei ist der Konus der Seiltrommeln 39 so ausgebildet, dass die Zugseile 23 vom größeren zum kleineren Durchmesser hin aufgewickelt werden. Das bewirkt, dass sich die Schließgeschwindigkeit mit zunehmender Schließzeit verringert, die Zugkraft sich erhöht. Durch diese Anordnung kann ein relativ leichter und kleiner Elektromotor 24 zum Einsatz kommen. Zur weiteren Reduzierung der Zuziehkraft können die Zugseile 23 alternativ über eine Umlenkrollen 27 geführt werden, siehe wieder Fig. 2. Beim Schließen wird der Lukendeckel 12 gegen die Federkraft der Druckfedern 19 nach unten gezogen. Die Stützhebel 18 laufen in der Hubschiene 16 horizontal nach innen und spannen die Druckfedern 19 wieder vor. Die Stützhebel 18 bewegen sich dabei kreisbogenförmig nach unten. Der Schließvorgang ist abgeschlossen, wenn der Lukendeckel 12 komplett und mit dem vorgegebenen Druck auf dem Dichtungsprofil 35 aufliegt. Dabei legt sich der Lukendeckel 12 auf zwei Widerlager 51 auf den Gehäuseelementen 21 bzw deren Deckel ab. Bedingt dadurch entsteht eine exakte Höhenfixierung- und Verspannung des Lukendeckels 12 zum Lukenrahmen. 11. Über die Höhe der Widerlager 51 kann, wenn erforderlich, die Höhe des Lukendeckels 12 zum Lukenrahmen 11 eingestellt werden. Die Motorsteuerung muss dabei nicht neu justiert werden und bleibt auf jeden Fall erhalten. Der Elektromotor 24 wird über die elektronische Motorsteuerung abgeschaltet.

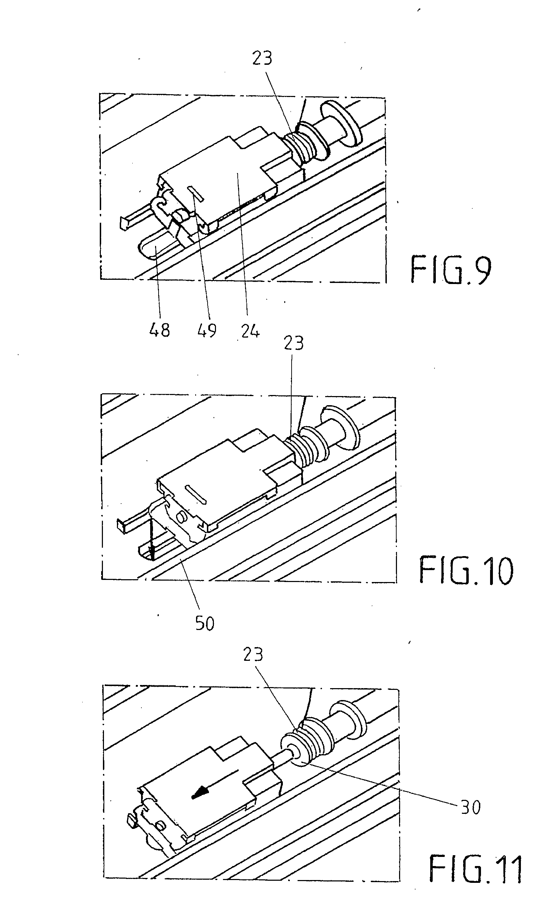

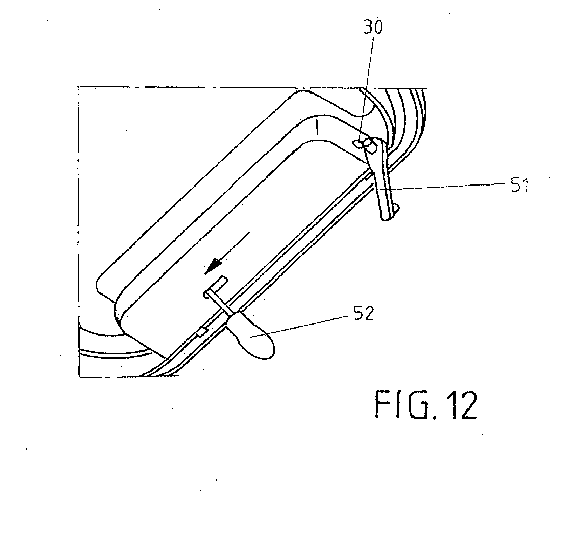

Alternativ können die Stützhebel 18 über ein zusätzliches Drehgelenk 28 zweiteilig ausgeführt sein und eine zusätzliche Umschlagfeder 29 aufweisen, siehe die Fig. 4 der Zeichnung. Im geöffneten Zustand ist die Kraftrichtung der Umschlagfeder 29 nach oben gerichtet, der an der Hubschiene 16 befestigte Teil des Stützhebeloberteiles 42 steht wie in Fig. 4 nach oben. Beim Schließen des Lukendeckels 12 werden diese zweiteiligen Stützhebel 18 über das zusätzliche Drehgelenk 28 nach unten gezogen. Dabei wird der an der Hubschiene 16 befestigte Teil des Stützhebels 18 gegen die Kraft der Umschlagfeder 29 soweit nach unten gezogen, dass die Umschlagfeder 29 die Kraftrichtung umkehrt und der an der Hubschiene 16 befestigte Teil des Stützhebels 18 nach unten gezogen wird und ebenfalls die Kraftrichtung der Druckfedern 19 umkehrt. Bedingt dadurch ist der Antrieb in der geschlossenen Stellung entlastet, der Druck des Lukendeckels 12 auf das Dichtunsgmittel 35 sicher gewährleistet. Beim Öffnen wird der Stützhebel 18 durch einen Nocken auf der Wickelwelle 23 so weit nach oben gedrückt, bis die Umschlagfeder 29 die Kraftrichtung nach oben umkehrt und die, Druckfedern 19 den Lukendeckel 12 anheben. Aus der beidseitig geöffneten Stellung kann es bauartbedingt erforderlich sein, dass zuerst eine Seite bis kurz vor der Endstellung zugefahren wird, dann die gegenüberliegende Seite komplett zufährt, danach die noch leicht geöffnete Seite komplett schließt. Der erfindungsgemäße Dachluke 10 weist außerdem eine Notbetätigung auf, derart, dass nach horizontaler Verschiebung der Elektromotoren 24 jeweils ein an dem jeweilig freiliegenden Ende der Wickelwellen 23 ausgebildeter Innensechskant 30 vom Fahrzeuginneren aus betätigbar ist. Bei Ausfall der Spannungsversorgung oder Motordefekten, kann der Lukendeckel 12 dabei manuell geschlossen werden. Für diesen Fall ist der Elektromotor 24 oben und unten von zwei Motorführungen 49 formschlüssig gehalten, und in den Gehäuseelementen 21 auf Führungsschienen 50 axial verschiebbar, siehe die Fig. 9, 10 und 11 der Zeichnung. Im Grundzustand (siehe Fig. 9) wird der Elektromotor 24 über eine Sicherungskappe fixiert. Zur Aktivierung der Notbetätigung wird die Sicherungskappe mit einem normalen Schlitzschraubendreher 52, siehe Fig. 12 von der Fahrzeuginnenseite entfernt. Der Elektromotor 24 kann dann soweit verschoben werden (siehe Fig. 10 und 11), dass die Innensechskantverbindung zur Wickelwelle 23 getrennt ist, siehe Fig. 12. Die Wickelwelle 23 ist an einem Ende aus dem Gehäuse herausgeführt. Dieses Ende ist mit dem Innensechskant 30 versehen. Dieser Innensechskant 30 ist vom Fahrzeuginneren aus am Gehäuse erreichbar. Zum Schließen des Lukendeckels 12 wird mit einem Ratschenschlüssel 51 über den Innensechskant 30 die Wickelwelle 23 gedreht und der Lukendeckel 12 geschlossen. Ist der Vorgang abgeschlossen, kann der Elektromotor 24 wieder zurück geschoben und mit der Wickelwelle 23 verrastet werden.

Die manuelle Betätigung des Lukendeckels 12 umfasst eine den Lukendeckel 12 über jeweils wenigstens einen Kipphebel 31 formschlüssig an den Hubschienen 16 verrastende mechanische Verriegelung, siehe dazu die Fig. 5, 6 und 7. Die Kipphebel 31 sind in den Gehäuseelementen 21 beweglich, unter Vorspannung wenigstens einer Schenkelfeder 32 auf Zapfen 33 gelagert, siehe Fig. 6 oder 7. Die Lager können wie oben beschrieben unterschiedlich ausgeführt sein. Der Lukendeckel 12 wird dabei also in Z-Richtung durch an den Hubschienen 16 formschlüssig verrastete Kipphebel 31 mit Rasthaken (Kipphebel) gegen den Lukenrahmen 11 mechanisch verriegelt. Es ist dazu in Fig. 5 der Kipphebel 31 in geschlossenem und in Fig. 6 in geöffnetem Zustand dargestellt. In X- und Y-Richtung wird der Lukendeckel 12 durch eine Kombination aus Stützhebeln 18, Druckfedern 19 und Gleitstücken 20 in den Hubschienen 16 geführt, s.o. In den Hubschienen 16 befinden sich, jeweils durch Mittelstege 37 getrennt, vorgespannte Druckfedern 19 mit je einem Gleitstück 20 zur Minimierung der Reibung. Die Druckfedern 19 wirken über die Gleitstücke 20 auf Stützhebel 18 ein, die sich in Kulissenführungen 41 in den Hubschienen 16 horizontal bewegen können. Eine zusätzliche Fixierung ist in X-und Y-Richtung ist durch den umlaufenden Rand des Lukenrahmens 11 gegeben, der den Lukendeckel 12 im geschlossenen Zustand einfasst.

Zum manuellen Öffnen kann die Verbindung zwischen Kipphebel 31 und Hubschiene 16 von Hand über einen entsprechend gekennzeichneten Druckknopf 45 in den Gehäuseelementen 21 vom Innenraum des Fahrzeugs aus gelöst werden, siehe wieder die Fig. 5, 6 oder 7. Durch Betätigen des Druckknopfs 45 schwenkt der Kipphebel 31 gegen die Vorspannung der Schenkelfeder 32 zurück und löst die Verrastung am Rasthaken der Hubschiene 16. Die unter Vorspannung stehenden Stützhebel 18 drücken den Lukendeckel 12 nach oben. Dabei kann zur Begrenzung der Öffnungsgeschwindigkeit des Lukendeckels 12 ein auf die Lagerelemente 22 der Stützhebel 18 einwirkender Rotationsdämpfer 34 vorgesehen sein, siehe Fig. 5. Mit Abschluss der Öffnung liegen die Stützhebel 18 unter Federvorspannung an Anschlägen 36 der Hubschienen 16 an. Die Stützhebel 18 sind ebenfalls über Anschläge 26 am Gehäuseboden fixiert, so dass der Lukendeckel 12 stabil gehalten wird. Der Kipphebel 31 schwenkt nach Loslassen des Druckknopfs 45 in seine Ausgangsstellung zurück und kann so beim Schließen des Lukendeckels 12 die Verrastung wieder sicherstellen.

Zum Schließen wird der Lukendeckel 12 mit einem mit dem Lukendeckel 12 verklebten Griff 44 gegen die Federkraft der Druckfedern 19 von Hand nach unten gezogen, bis der Kipphebel 31 am Gegenstück der Hubschiene 16 einrastet. Der Schließvorgang ist abgeschlossen.

Als zusätzliches Ausgestaltungsmerkmal der vorliegenden Erfindung kann außerdem vorgesehen sein, dass der Lukendeckel 12 eine Einrichtung zur Be- und Entlüftung umfasst. Durch dieses optionale Zusatzmerkmal wird eine sehr vorteilhafte Zusatzfunktion verwirklicht. Zu diesem Zweck wird diese Einrichtung zur Be- und Entlüftung, die in den Fig. der Zeichnung nicht separat dargestellt ist, in eine entsprechende Ausnehmung im Lukendeckel 12 montiert. Diese Einrichtung zur Be- und Entlüftung kann sowohl elektrisch, als auch über Wärmekonvektion oder auch dynamisch arbeitend ausgelegt sein. Zur Verhinderung von Wassereintritt in das Fahrzeug sind diese Einrichtungen bevorzugt mit z.B. federnden Ventilklappen versehen, oder im Aufbau derart gestaltet, dass kein Eindringen von Wasser möglich ist.

Wie bereits erwähnt, sind die dargestellten Ausführungsformen nur eine beispielsweise Verwirklichung der Erfindung. Diese ist nicht darauf beschränkt, es sind vielmehr noch mancherlei Abänderungen und Ausbildungen möglich. So sind insbesondere Abwandlungen in der konstruktiven Ausbildung der Dachluke denkbar. Weiterhin möglich sind andersartig ausgestaltete Dachluken an sich.

### Bezugszeichenliste:

- 10.: Dachluke
- 11.: Lukenrahmen
- 12.: Lukendeckel
- 13.: Aussteller
- 14.: Hebelmechanik
- 15.: Zwischenplatte (zwischen 12 und 13)
- 16.: Hubschiene
- 17.: Zugseil (an 16)
- 18.: Stützhebel (in 16)
- 19.: Druckfeder (in 16)
- 20.: Gleitstück (in 16)
- 21.: Gehäuseelement
- 22.: Lagerelement (für 18 in 21)
- 23.: Wickelwelle (für 17)
- 24.: Elektromotor (für 23)
- 25.: Schenkelfeder (an 18)
- 26.: Anschlag (an 18)
- 27.: Umlenkrolle (an 16 für 17)
- 28.: Drehgelenk (an 18)
- 29.: Umschlagfeder (an 18)
- 30.: Innensechskant (an 23)
- 31.: Kipphebel (an 12)
- 32.: Schenkelfeder (für 31)
- 33.: Zapfen (für 31)
- 34.: Rotationsdämpfer (auf 22 einwirkend)
- 35.: Dichtungsmittel (zwischen 11 und 12)
- 36.: Anschlag (an 16 für 18)
- 37.: Mittelsteg (von 16)
- 38.: Zapfen(von 18 bei 22)
- 39.: Seiltrommel
- 40.: Nocken (von 23)
- 41.: Kulissenführung (in 16 für 18)
- 42.: Stützhebel- Oberteil
- 43.: Stützhebel- Unterteil
- 44.: Griff (an 12)
- 45.: Druckknopf (an 21)
- 46.: Dachhaut
- 47.: Klebespalt (zwischen 12 und 46)
- 48.: Motorschlitten
- 49.: Motorführung
- 50.: Führungsschiene (bei 49)
- 51.: Ratschenschlüssel
- 52.: Schlitzschraubendreher
- 53.: Widerlager(an 21)

## Patentansprüche

1. Dachluke (10) für Fahrzeuge, mit einem im wesentlichen rechteckigen Lukenrahmen (11), einem im wesentlichen rechteckigen Lukendeckel (12), mit Dichtmitteln zwischen dem Lukenrahmen (11) und dem Lukendeckel (12) und mit Mitteln zu Halterung des Lukendeckels (12) am Lukenrahmen (11), die aus jeweils zwei an den Schmalseiten des Lukendeckels (12) und des Lukenrahmens (11) befestigten, manuell oder elektromotorisch betätigbaren Ausstellern (13) bestehen, **dadurch gekennzeichnet, dass** zur Betätigung der Aussteller (13) eine in einem im wesentlichen flach dimensionierten Lukenrahmen (11) befindliche, ferderunterstützte Hebelmechanik (14) ausgebildet ist.

2. Dachluke nach Anspruch 1, **dadurch gekennzeichnet, dass** der im wesentlichen flach dimensionierte Lukenrahmen (11) aus einem aus einem Stück bestehenden Profilelement besteht.

3. Dachluke nach Anspruch 2, **dadurch gekennzeichnet, dass** der im wesentlichen flach dimensionierte Lukenrahmen (11) aus einem in einem Stück gebogenen und an der Stoßstelle verbundenen Metallprofil wie Aluminiumprofil besteht.

4. Dachluke nach einem der Ansprüche 1 bis 3, **dadurch gekennzeichnet, dass** die Verbindung des Lukendeckels (12) mit den Ausstellern (13) als Klebeverbindung ausgebildet ist.

5. Dachluke nach einem der Ansprüche 1 bis 4, **dadurch gekennzeichnet, dass** der Lukendeckel (12) aus Einscheiben- Sicherheitsglas besteht.

6. Dachluke nach einem der Ansprüche 1 bis 4, **dadurch gekennzeichnet, dass** der Lukendeckel (12) aus Metall besteht.

7. Dachluke nach einem der Ansprüche 1 bis 4, **dadurch gekennzeichnet, dass** der Lukendeckel (12) aus Kunststoff besteht.

8. Dachluke nach Anspruch 6, **dadurch gekennzeichnet, dass** zum Auswerfen des Lukendeckels (12) aus Metall eine zwischen dem Lukendeckel (12) und den Ausstellern (13) angeordnete Zwischenplatte (15) vorgesehen ist.

9. Dachluke nach Anspruch 8, **dadurch gekennzeichnet, dass** die Zwischenplatte (15) lösbar mit den Ausstellern (13) verbunden ist.

10. Dachluke nach einem der Ansprüche 1 bis 9, **dadurch gekennzeichnet, dass** der Lukendeckel (12) über Hubschienen (16) an den Ausstellern (13) befestigt ist.

11. Dachluke nach Ansprüche 10, **dadurch gekennzeichnet, dass** zur Fixierung des Lukendeckels (12) gegen den Lukenrahmen (11) an den Hubschienen (16) befestigte Zugseile (17) ausgebildet sind.

12. Dachluke nach Anspruch 11, **dadurch gekennzeichnet, dass** zur Fixierung des Lukendeckels (12) gegen den Lukenrahmen (11) ein zusätzliche mechanische Verriegelung ausgebildet ist.

13. Dachluke nach einem der Ansprüche 1 bis 12, **dadurch gekennzeichnet, dass** zur Führung des Lukendeckels (12) in den Hubschienen (16) eine Kombination von Stützhebeln (18), Druckfedern (19) und Gleitstücken (20) ausgebildet ist, derart, dass die Druckfedern (19) über die Gleitstücke (20) auf die sich in den Hubschienen (16) horizontal bewegenden Stützhebel (18) einwirken.

14. Dachluke nach einem der Ansprüche 1 bis 13, **dadurch gekennzeichnet, dass** die Aussteller (13) über Gehäuseelemente (21) an dem Lukenrahmen (11) befestigt sind.

15. Dachluke nach Anspruch 14, **dadurch gekennzeichnet, dass** die Stützhebel (18) über Lagerelemente (22) in den Gehäuseelementen (21) drehbar gelagert sind.

16. Dachluke nach Anspruch 15, **dadurch gekennzeichnet, dass** die Zugseile (17) auf der den Hubschienen (16) gegenüberliegenden Seiten auf in den Gehäuseelementen (21) gelagerten Wickelwellen (23) mit konischen Seiltrommeln aufwickelbar sind.

17. Dachluke nach Anspruch 16, **dadurch gekennzeichnet, dass** zum Antrieb der Wickelwellen (23) in den Gehäuseelementen (21) jeweils wenigstens ein Elektromotor (24) ausgebildet ist.

18. Dachluke nach Anspruch 17, **dadurch gekennzeichnet, dass** die Elektromotoren (24) horizontal verschiebbar in den Gehäuseelementen (21) gelagert sind.

19. Dachluke nach einem der Ansprüche 1 bis 18, **dadurch gekennzeichnet, dass** zur Erzeugung der Federvorspannung zum Heben des Lukendeckels (12) alternativ oder ergänzend an den Stützhebeln (18) befindliche Schenkelfedern (25) ausgebildet sind.

20. Dachluke nach einem der Ansprüche 1 bis 19, **dadurch gekennzeichnet, dass** zur Stabilisierung des Lukendeckels (12) nach Abschluss des Öffnungsvorganges an den Stützhebeln (18) auf den Boden der Gehäuseelemente (21) einwirkende Anschläge (26) ausgebildet sind.

21. Dachluke nach einem der Ansprüche 1 bis 20, **dadurch gekennzeichnet, dass** der Konus der Seiltrommeln der Wickelwellen (23) derart ausgebildet ist, dass die Zugseile (17) vom größeren zum kleineren Durchmesser hin aufgewickelt werden.

22. Dachluke nach Anspruch 21, **dadurch gekennzeichnet, dass** zur weiteren Reduzierung der Ziehkraft die Zugseile (17) alternativ oder ergänzend über an den Hubschienen(16) angeordnete Umlenkrollen (27) geführt werden.

23. Dachluke nach einem der Ansprüche 1 bis 22, **dadurch gekennzeichnet, dass** die Stützhebel (18) über ein zusätzliches Drehgelenk (28) zweiteilig ausgebildet sind und wenigstens eine zusätzliche Umschlagfeder (29) aufweisen.

24. Dachluke nach einem der Ansprüche 1 bis 23, **dadurch gekennzeichnet, dass** der Lukendeckel (12) eine Notbetätigung aufweist, derart, dass nach horizontaler Verschiebung der Elektromotoren (24) jeweils ein an dem jeweilig freiliegenden Ende der Wickelwellen (23) ausgebildeter Innensechskant (30) vom Fahrzeuginneren aus betätigbar ist.

25. Dachluke nach einem der Ansprüche 1 bis 24, **dadurch gekennzeichnet, dass** die manuelle Betätigung des Lukendeckels(12) eine den Lukendeckel (12) über jeweils wenigstens einen Kipphebel (31) formschlüssig an den Hubschienen (16) verrastende mechanische Verriegelung umfasst.

26. Dachluke nach Anspruch 25, **dadurch gekennzeichnet, dass** die Kipphebel (31) in den Gehäuseelementen (21) beweglich, unter Vorspannung wenigstens einer Schenkelfeder (32) auf Zapfen (33) gelagert sind.

27. Dachluke nach Anspruch 25 oder 26, **dadurch gekennzeichnet, dass** zur Begrenzung der Öffnungsgeschwindigkeit des Lukendeckels (12) ein auf die Lagerelemente (22) der Stützhebel (18) einwirkender Rotationsdämpfer (34) ausgebildet ist.

28. Dachluke nach einem der Ansprüche 1 bis 27, **dadurch gekennzeichnet, dass** der Lukendeckel (12) eine Einrichtung zur Be- und Entlüftung umfasst.
